**Europäisches Patentamt**

**European Patent Office**

**Office européen des brevets**

(19)

(11) Numéro de publication : **0 074 898 B2**

(12) # NOUVEAU FASCICULE DE BREVET EUROPEEN

(45) Date de publication du nouveau fascicule du brevet : **08.05.91 Bulletin 91/19**

(51) Int. Cl.$^5$ : **H04Q 1/10, H04Q 1/14**

(21) Numéro de dépôt : **82401645.5**

(22) Date de dépôt : **10.09.82**

(54) **Colonne de répartiteur téléphonique, profilé pour une telle colonne, et répartiteur téléphonique.**

(30) Priorité : **10.09.81 FR 8117193**

(43) Date de publication de la demande :
**23.03.83 Bulletin 83/12**

(45) Mention de la délivrance du brevet :
**26.03.86 Bulletin 86/13**

(45) Mention de la décision concernant
l'opposition :
**08.05.91 Bulletin 91/19**

(84) Etats contractants désignés :
**DE FR GB SE**

(56) Documents cités :
**FR-A- 2 002 972**
**FR-A- 2 317 843**
**FR-A- 2 333 993**
**FR-A- 2 431 230**
**FR-A- 2 450 523**
**FR-A- 2 450 546**
**GB-A- 1 141 661**
**US-A- 3 866 364**
**COMMUNICATION & ELECTRONIQUE, no. 56,
janvier 1977, pages 95-104, Paris (FR); R. LE
CORVEC et al.: "La serrurerie de salle Socotel
73"**

(56) Documents cités :
**"Uni-Frame":- prospectus de la société
PORTA SYSTEMS CORPS, New York, USA, TR
7000 BM 1-79;
"Répartiteur SFE":- prospectus de la société
CTM, Paris, France, mars 1981
"Téléphonie Elémentaire/Répartiteurs - Principe du multiplage", "Cours professionnels
techniques" de la Direction Générale des
Télécommunications, page 17
"Multiples téléphoniques", J.FRUCHOU,
Ministère des Postes et Télécommunications,
1963, Planche 2
"Multiples téléphoniques", J.FRUCHOU,
Ministère des Postes et Télécommunications,
1965, Planche IX
"Câbles, Câblage et raccordement", J.HIL-
BERT et J.FROPPIER, Direction des services
d'enseignement des PTT, 1960, pages 35 à 37
et 47 à 50**

(73) Titulaire : **BOGA S.A.**
**39 à 45 quai Bérigny**
**F-76400 Fecamp (FR)**

(72) Inventeur : **Lacombe, Jean-Jacques**
**15 avenue Gambetta**
**F-76400 Fécamp (FR)**

(74) Mandataire : **Arnaud, Jean Pierre Alfred**
**Cabinet Arnaud 94 rue Saint-Lazare**
**F-75009 Paris (FR)**

EP 0 074 898 B2

## Description

La présente invention concerne les répartiteurs téléphoniques, et plus précisément une colonne constituant un ensemble autonome utilisé pour la réalisation de répartiteurs téléphoniques. Les répartiteurs téléphoniques sont destinés à relier des câbles externes de lignes téléphoniques à des câbles internes desservant habituellement un autocommutateur d'un central téléphonique. Le répartiteur proprement dit comprend une ossature portant des premiers blocs de connecteurs, reliés aux câbles externes, et des seconds blocs de connecteurs, reliés aux câbles internes. Des connecteurs choisis des premiers blocs sont reliés sélectivement à des connecteurs choisis des seconds blocs par des fils de liaison appelés « jarretières ». Ces liaisons internes au répartiteur peuvent varier en fonction de l'exploitation du central téléphonique correspondant.

On a récemment cherché à réduire le coût d'un tel répartiteur et surtout le coût de la main d'oeuvre nécessaire pour son exploitation, notamment par réduction du nombre de personnes nécessaires à la réalisation des connexions. Il existe ainsi maintenant des répartiteurs téléphoniques permettant à un seul agent d'assurer les connexions entre les différents blocs de connecteurs.

Ainsi, la demande publiée de brevet allemand n° DE-A-2 315 485 décrit un répartiteur téléphonique dans lequel des premiers blocs de connecteurs forment une première sous-matrice et des seconds blocs de connecteurs forment une seconde sous-matrice. Les deux sous-matrices sont coplanaires et ont leurs colonnes alignées. Cette disposition dans le même plan des différents blocs de connecteurs permet la mise en place des liaisons entre les deux types de blocs de connecteurs par une seule personne placée d'un seul côté du répartiteur.

On connaît également un perfectionnement de ce type de répartiteur, selon lequel les deux sous-matrices formées par les premiers et les seconds blocs de connecteurs respectivement, ont des lignes ou des colonnes entrelacées à l'ordre de 2, c'est-à-dire imbriquées les unes dans les autres. Cette disposition est destinée à réduire la longueur des liaisons entre les blocs de connecteurs des différents types. Ce brevet décrit en outre la formation de cheminées, délimitées par des anneaux, pour chaque paire de colonnes de l'ensemble formé.

Ainsi, les répartiteurs téléphoniques connus doivent comporter une ossature, métallique en général, assurant le support des colonnes de blocs de connecteurs, imbriquées ou non, et munie en outre de glissières, de goulottes, etc., permettant le support des différents accessoires habituellement utilisés tels que des anneaux de guidage de câbles et de cordons de liaison, des supports de câbles, des marchepieds, etc. La construction d'un tel répartiteur téléphonique comprend donc d'abord la construction d'une ossature. Cette opération est onéreuse, prend beaucoup de temps et manque de souplesse dans la mesure où l'ossature doit être entièrement réalisée avant montage des différents éléments organiques du répartiteur.

L'invention concerne des répartiteurs téléphoniques réalisés selon un principe tout à fait différent. En effet, contrairement à la technique connue qui met en oeuvre la construction d'une ossature puis le montage des éléments organiques et enfin la pose des cordons de liaison, l'invention met en oeuvre d'abord le montage des éléments organiques destinés à faire partie d'une colonne d'une matrice de blocs de connecteurs, sur un profilé, puis la mise en place du profilé, muni des différents éléments organiques, et enfin la connexion des câbles et la pose des cordons de liaison entre les blocs de connecteurs des deux types, appartenant à une même colonne ou à des colonnes différentes.

L'invention concerne donc, à titre de produit industriel nouveau, une colonne de répartiteur téléphonique comprenant un profilé, muni des différents éléments organiques nécessaires tels que des blocs de connecteurs d'un premier type, des blocs de connecteurs d'un second type, des anneaux de cheminée, des anneaux inférieurs permettant la connexion entre les diverses colonnes, etc.

Le principal avantage de l'invention est de permettre la réalisation en usine de la plupart des opérations réalisées jusqu'à présent sur place. En outre, ces colonnes autonomes permettent la construction d'un répartiteur téléphonique en un temps extrêmement court, comparé au temps nécessaire jusqu'à présent pour les diverses opérations de montage.

Plus précisément, l'invention concerne une colonne autonome de répartiteur téléphonique, comprenant :

un seul profilé ayant la même section sur toute la longueur lui donnant une grande rigidité à la torsion et à la flexion et comportant au moins deux types de dispositifs de fixation solidaires du profilé et s'étendant sur toute la longueur du profilé, les deux types de dispositifs de fixation étant choisis parmi les trois types suivants :

un premier type comprenant deux ailes parallèles à l'axe longitudinal du profilé et délimitant entre elles une gorge longitudinale ayant deux faces internes en regard,

un second type comprenant deux flasques solidaires du profilé et délimitant une fente qui débouche dans une cavité délimitée par une traverse disposée en face de la fente, et

un troisième type ayant un flasque destiné à porter un clips,

des éléments de maintien destinés à la fixation du profilé à ses deux extrémités ou à leur proximité,

plusieurs organes de fixation de blocs de connecteurs destinés à coopérer avec un type de dispositif de fixation du profilé, et

au moins deux accessoires munis d'un organe de fixation destiné à coopérer avec un autre type de dispositif de fixation du profilé, un de ces accessoires étant destiné à guider des cordons latéraux de liaison en un seul point sur la longueur du profilé.

Selon une caractéristique avantageuse, le dispositif de fixation d'un premier type comprend deux ailes pourvues de rainures longitudinales les rainures longitudinales d'une face étant décalées par rapport à celles de l'autre face.

Le profilé qui doit avoir une grande rigidité à la torsion et à la flexion, étant donné sa longueur qui peut être importante et le poids et la disposition des différents éléments organiques qu'il doit porter, a plusieurs cavités longitudinales fermées latéralement, de préférence trois.

Le profilé comporte avantageusement quatre dispositifs de fixation du premier type et quatre dispositifs de fixation du second type, deux des dispositifs de fixation du second type étant en partie délimités par des ailes des dispositifs de fixation du premier type et des flasques prolongeant ces ailes.

Les organes de fixation des éléments organiques tels que les blocs de connecteurs et les accessoires, destinés à coopérer avec les dispositifs de fixation du profilé, peuvent être de différents types. Ainsi, un organe de fixation peut comprendre un simple trou destiné au passage d'une vis qui repousse cet organe contre les extrémités des ailes d'un dispositif de fixation du premier type, le filet de la vis coopérant avec les rainures de la gorge.

Un autre organe de fixation peut comprendre une barre disposée dans la cavité d'un dispositif de fixation du second type, cette barre étant repoussée contre la face interne des flasques par une vis prenant appui contre la traverse délimitant la cavité du profilé.

L'organe de fixation peut aussi comprendre une plaque percée d'un trou et munie d'un ergot dépassant d'un côté de la plaque, celle-ci étant disposée contre la face externe des flasques d'un dispositif de fixation du second type, une contre-plaque placée dans la cavité du dispositif de fixation du second type étant serrée contre la face interne des flasques par une vis passant par le trou de la plaque qui est ainsi repoussée contre la face externe des flasques. L'ergot pénètre dans la fente et assure ainsi l'alignement de l'organe de fixation sur la fente, donc sur le profilé.

L'organe de fixation peut aussi être un simple clips maintenu élastiquement sur le bord d'un flasque.

Les différents éléments organiques portés par une colonne selon l'invention peuvent être de nombreux types. Ces éléments comprennent les blocs de connecteurs constituant soit des « têtes de câbles »,

c'est-à-dire raccordés aux câbles externes, soit des « réglettes », c'est-à-dire raccordés aux câbles internes rejoignant un autocommutateur. Ces blocs de connecteurs sont avantageusement fixés sur des supports en U coopérant eux-mêmes avec au moins un dispositif de fixation du profilé. D'autres éléments organiques sont des anneaux de cheminée de différentes formes, des anneaux de caniveau destinés au guidage des cordons de liaison entre les différents blocs de connecteurs, des équerres de support, des platines, des dispositifs de fixation des câbles internes ou externes, tels que des pontets et colliers de retenue, des vérins à vis, etc.

L'invention concerne aussi un profilé destiné à la réalisation d'une telle colonne et comprenant deux joues reliées par quatre traverses qui délimitent trois cavités internes donnant une grande rigidité à la torsion au profilé. Des dispositifs de fixation sont disposés dans le prolongement des joues et sur leurs faces externes.

L'invention concerne aussi un répartiteur téléphonique réalisé à partir des colonnes selon l'invention.

Dans le présent mémoire, on décrit l'invention en référence à des « colonnes », ce terme désignant l'ensemble matériel formé par le profilé et les éléments organiques, mais aussi la colonne de la matrice formée par l'ensemble du répartiteur. Il faut cependant noter que ce terme de « colonne » a aussi la signification du mot « ligne » étant donné que les « colonnes » selon l'invention peuvent aussi bien être montées horizontalement que verticalement.

D'autres caractéristiques et avantages de l'invention ressortiront mieux de la description qui va suivre, faite en référence aux dessins annexés sur lesquels:

la figure 1 est une élévation latérale schématique représentant un exemple de colonne de répartiteur téléphonique selon l'invention ;

la figure 2 est une élévation frontale d'une partie de répartiteur construit selon l'invention, sous forme schématique ;

la figure 3 est une vue de bout d'un mode de réalisation avantageux de profilé utilisé selon l'invention, pratiquement à l'échelle 1 ;

la figure 4 est une coupe d'une partie du coin supérieur gauche de la figure 3, représentant des détails plus précis du profilé utilisé selon l'invention ;

la figure 5 est une perspective d'une platine constituant un exemple d'élément organique d'une colonne selon l'invention ;

la figure 6 est une coupe par un plan horizontal d'une partie de profilé sur lequel est montée la platine de la figure 5 ;

la figure 7 est une perspective d'un exemple de support en U d'un bloc de connecteurs ;

la figure 8 est une coupe par un plan horizontal d'une partie d'un profilé selon l'invention, portant un support du type représenté sur la figure 7, maintenu par des dispositifs de fixation d'un premier type du profilé ;

la figure 9 représente une variante dans laquelle un support en U est maintenu par un clips coopérant avec un dispositif de fixation d'un troisième type du profilé selon l'invention ;

la figure 10 est une perspective d'une équerre destinée à former soit un marchepied, soit un support de câbles ;

la figure 11 est une vue de bout de l'équerre de la figure 10 ;

la figure 12 est une coupe partielle représentant plus en détail l'organe de fixation de l'équerre de la figure 10 et sa coopération avec un profilé selon l'invention ;

la figure 13 est une élévation d'une contre-plaque faisant partie de l'organe de fixation de la figure 12 ;

la figure 14 est une vue en plan d'un exemple d'anneau de cheminée,

la figure 15 est une vue en plan, à plus petite échelle que la figure 14, d'une variante d'anneau de cheminée ;

la figure 16 est une élévation frontale d'un exemple d'anneaux de caniveau ;

la figure 17 est une élévation latérale des anneaux de la figure 16 ;

la figure 18 est une coupe par un plan vertical d'un vérin de fixation d'un profilé selon l'invention ; et les figures 19 et 20 représentent respectivement un collier de serrage de câble et une tresse de masse utilisés dans un répartiteur selon l'invention.

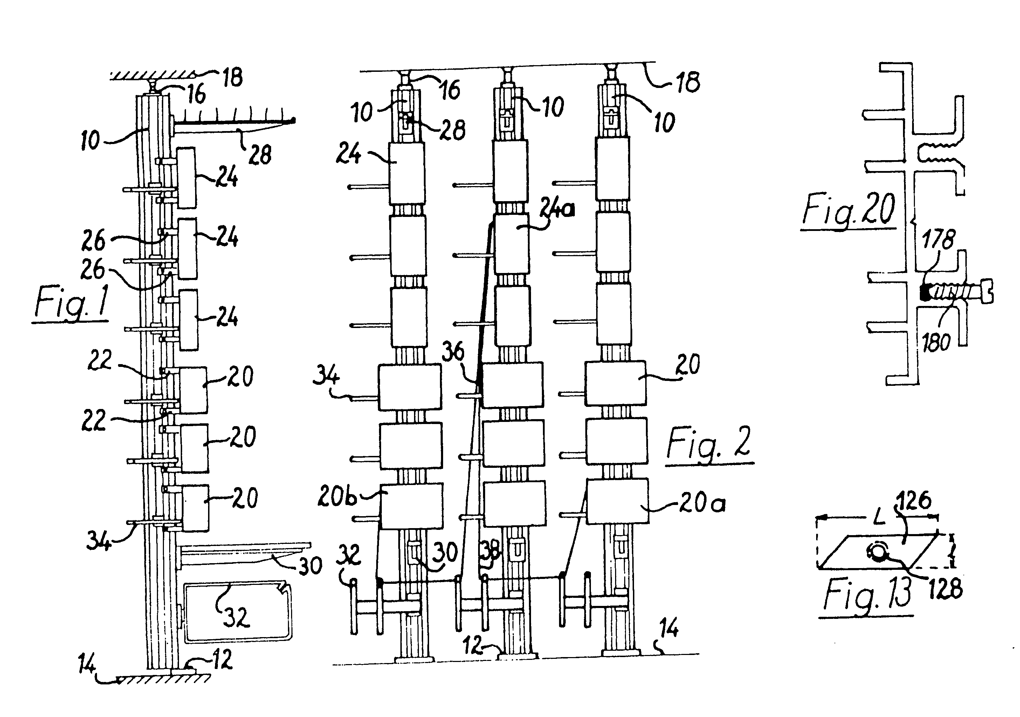

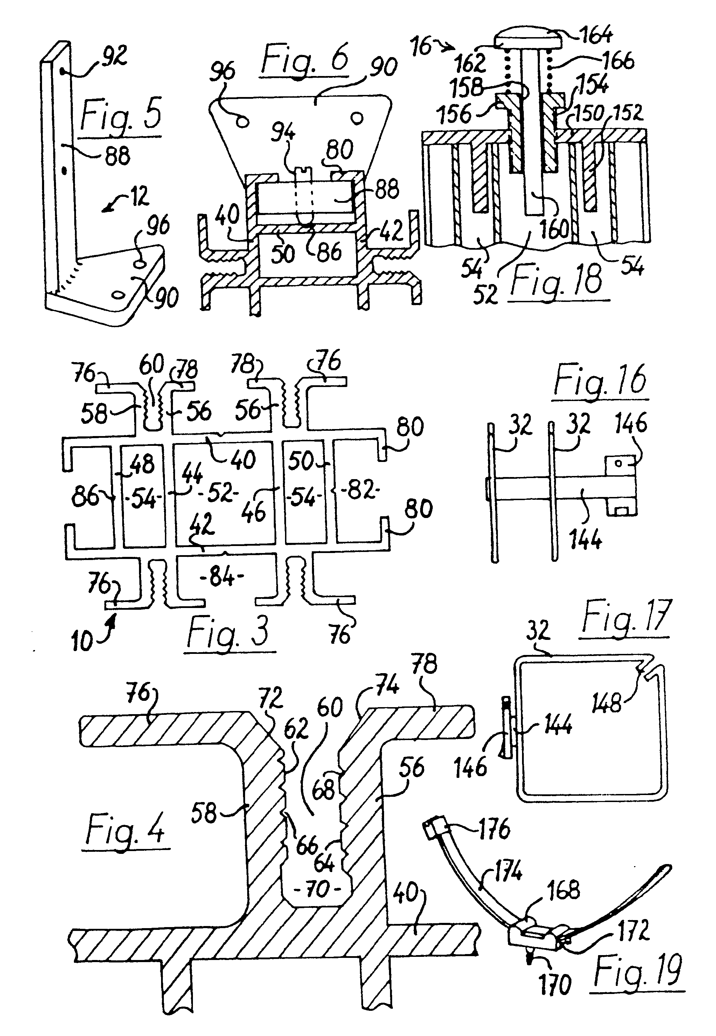

Les figures 1 et 2 représentent respectivement en élévation latérale et frontale une partie de répartiteur téléphonique réalisé selon l'invention. L'élément essentiel de chaque colonne est un profilé 10, décrit plus en détail en référence aux figures 3 et 4. Ce profilé est maintenu à sa partie inférieure par une platine 12, décrite en référence aux figures 5 et 6, assurant la fixation sur le sol 14. A la partie supérieure du profilé, un vérin 16, décrit en référence à la figure 18, assure le maintien contre un plafond 18.

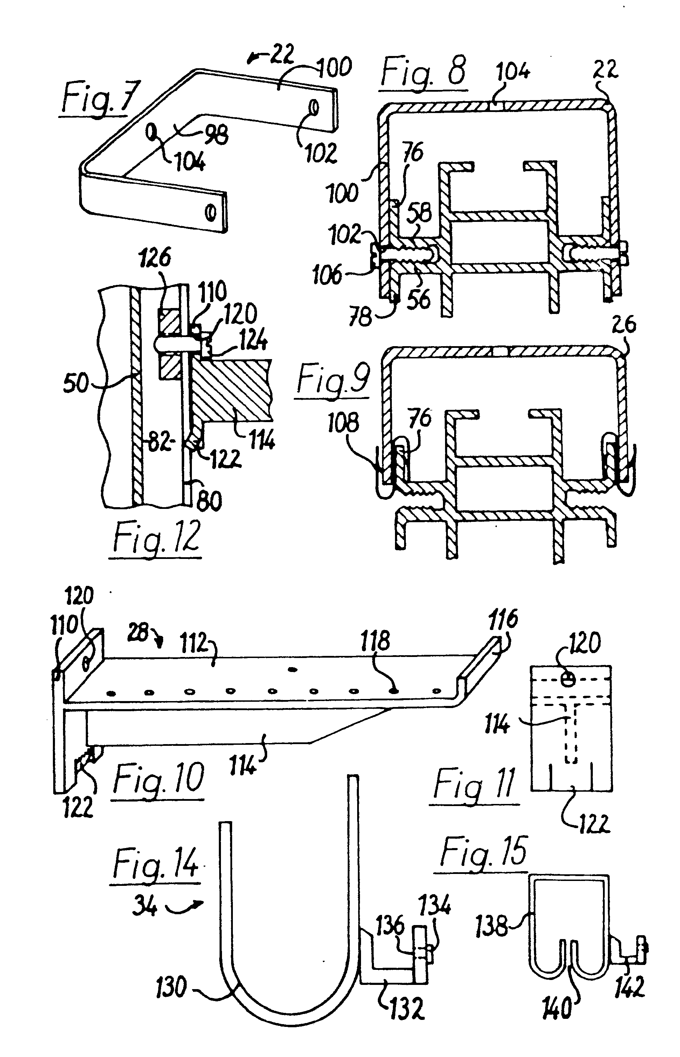

Le profilé 10 porte différents éléments organiques tels que des blocs 20 de connecteurs ou de raccordement, destinés à être reliés aux câbles externes et appelés « têtes de câbles ». Ces connecteurs 20 sont montés sur le profilé soit par des supports 22 décrits en référence aux figures 7 à 9, soit par tout dispositif convenable. Des blocs de connecteurs d'un second type, portant la référence 24, sont par exemple destinés à être reliés aux câbles internes et constituent des « réglettes ». Ils sont fixés sur le profilé 10 par des supports 26 en U qui peuvent être identiques aux supports 22. Les montages dépendent évidemment des « têtes de câbles » 20 et des « réglettes » particulières choisies qui peuvent être de différents types bien connus des hommes du métier. En outre, bien qu'on ait représenté des blocs de connecteurs d'un premier type placés en bas et des blocs d'un second type placés en haut, ces différents blocs peuvent être imbriqués ou avoir toute disposition voulue.

Le profilé 10 porte aussi une équerre 28, décrite en référence aux figures 10 à 13. Cette équerre est destinée à supporter des câbles disposés transversalement, utilisés à divers effets et habituellement placés en haut des répartiteurs. Une autre équerre 30 qui peut être analogue à l'équerre 28 mais qui porte une plaque de bois convenablement fixée constitue un marchepied.

Le profilé représenté sur les figures 1 et 2 porte en outre des anneaux 32 de caniveau ou de guidage et des anneaux 34 de cheminée. Ces anneaux sont destinés au passage de cordons de liaison tels que 36, 38, appelés « jarretières », placés entre des connecteurs d'un premier type tels que 24a et des connecteurs d'un second type tels que 20a et 20b.

Lorsqu'un répartiteur téléphonique doit être réalisé selon l'invention, des profilés 10 ayant la longueur nécessaire, sont munis de tous les éléments organiques nécessaires à la colonne particulière du répartiteur téléphonique prévu. Par exemple, les nombres de réglettes et de têtes de câbles sont déterminés, de même que leur emplacement, leur hauteur par rapport au bas des profilés, etc. Les équerres, les anneaux de cheminée et de caniveau, etc. sont aussi montés en fonction du plan prévu. La colonne, avantageusement munie d'une platine 12 et d'un vérin 16, est alors expédiée sur place. La mise en place de la colonne formée par le profilé portant les différents éléments organiques, est extrêmement rapide et l'ensemble du répartiteur téléphonique peut être monté en très peu de temps. Dès que les premières colonnes ont été mises en place, le raccordement des câbles externes et des câbles internes peut commencer. Les câbles sont avantageusement directement fixés sur le profilé, par des dispositifs convenables bien connus des hommes du métier, tels que pontets, colliers, etc., montés sur les dispositifs de fixation du profilé 10, décrits plus en détail dans la suite du présent mémoire. Après la pose des câbles internes et externes, il ne reste plus qu'à poser les cordons de liaison tels que 36 et 38, en fonction d'un plan particulier de raccordement. Selon l'invention, le raccordement, par un tel cordon de liaison, d'une tête de câble de l'une des colonnes à une réglette d'une autre colonne est effectué par passage obligatoire dans des anneaux de caniveau des deux colonnes concernées. Chaque colonne est munie de deux anneaux 32 de caniveau.

La figure 2 indique que les cordons partant vers des colonnes placées plus à droite passent dans l'anneau de droite et les cordons partant vers des colonnes placées plus à gauche passent dans l'anneau de gauche. De cette manière, tous les cordons de liaison passant entre plusieurs colonnes sont disposés horizontalement à un même niveau, celui des anneaux de caniveau. (Si les colonnes sont placées horizontalement, ce passage s'effectue alors verticalement). De cette manière, les différents cordons de liaison ne se croisent pas.

Le mode de réalisation particulier représenté sur les figures 1 et 2 présente de nombreux avantages. D'abord, il s'agit d'un répartiteur monoface, c'est-à-dire tel que toutes les opérations de montage peuvent être effectuées à partir d'une seule face de l'appareil. En outre, un seul opérateur est nécessaire à cet effet. Cette disposition permet un montage très simple des cordons de liaison, sans que l'opérateur puisse se tromper. En effet, celui-ci, lorsqu'il connaît les coordonnées de départ et d'arrivée du cordon de liaison particulier, fixe une extrémité dans la tête de câble. Ensuite, si la réglette correspondante est dans la même colonne que la tête de câble, il place le cordon dans les anneaux de cheminée de cette colonne jusqu'à la réglette voulue, en ne faisant passer le cordon qu'une fois dans chaque anneau de cheminée au maximum. Si la réglette correspondante est dans une colonne différente de celle de la tête de câble, il fait descendre le cordon de la tête de câble à un anneau de caniveau ou de guidage 32 de cette même colonne, celui de droite ou celui de gauche selon que la colonne ayant la réglette correspondante est à droite ou à gauche, puis le fait passer horizontalement dans un anneau 32 de guidage de la colonne contenant la réglette voulue. Il fait alors remonter le cordon vers cette réglette par passage une seule fois dans les anneaux de cheminée disposés entre les anneaux inférieurs de guidage 32 et la réglette. De cette manière, on peut considérer que le câblage est colinéaire et coplanaire et ne nécessite aucun croisement des cordons de liaison.

On considère maintenant plus en détail les différents éléments décrits sommairement en référence aux figures 1 et 2. L'élément le plus important est évidemment le profilé 10. Celui-ci est représenté en bout sur la figure 3 et en coupe agrandie sur la figure 4. Il comprend essentiellemment deux joues parallèles 40 et 42, reliées par deux traverses internes 44, 46 et deux traverses externes 48 et 50. Les traverses internes délimitent une cavité interne fermée 52 qui a avantageusement une section carrée. Les traverses 44 et 48 d'une part et 46 et 50 d'autre part délimitent des cavités externes fermées 54, de section rectangulaire. A l'extérieur des joues, les traverses internes 44 et 46 se prolongent par des ailes 56.

Cette disposition de trois cavités fermées et des ailes qui prolongent les traverses internes à l'extérieur des joues donne au profilé une rigidité remarquable aussi bien à la torsion qu'à la flexion, si bien que l'épaisseur de paroi du profilé peut être de l'ordre de 1,8 à 2 mm, lorsque le profilé est formé d'un alliage léger à base d'aluminium, pour une portée de 3 m et plus.

Le profilé comporte, en plus des éléments précités qui lui donnent une rigidité remarquable, d'autres ailes 58 qui, avec les ailes 56, délimitent des gorges de vissage 60. Comme indiqué plus en détail sur la figure 4, chaque gorge 60 est délimitée par deux faces en regard 62 et 64 qui portent des rainures longitudinales 66 et 68. Il faut noter sur la figure 4 que ces rainures sont décalées et ne se trouvent pas les unes en face des autres sur les deux faces en regard. Le fond de la gorge forme une chambre élargie 70. L'entrée de la gorge est délimitée par deux plans inclinés 72 et 74, formés au raccord des ailes 56 et 58 avec des flasques interne 78 et externe 76 respectivement.

Les joues qui se prolongent au-delà des traverses externes 48 et 50, portent en bout des flasques 80 repliés à angle droit, si bien qu'une cavité ouverte 82 est délimitée entre ces flasques, les extrémités des joues et chaque traverse externe telle que 50. Une cavité analogue 84 est formée entre les ailes internes 56, les flasques 78 de ces ailes délimitant entre eux une fente ayant exactement la même largeur que la fente délimitée entre les flasques 80. En outre, les flasques 78 sont séparés de la joue 40 ou 42 par une distance exactement égale à celle qui sépare les flasques 80 de la traverse correspondante telle que 50. Les cavités 82 et 84 ont donc exactement les mêmes dimensions. En outre, une rainure de trusquinage peu profonde est formée au fond de ces cavités 82 et 84, en position médiane, pour un centrage éventuel.

Les ailes 56 et 58 forment un premier dispositif de fixation du profilé. En effet, une vis guidée par les plans inclinés 72 et 74 peut être vissée entre les deux faces en regard 62 et 64, son filet se logeant dans les rainures 66 et 68. Il s'agit là d'un dispositif parfois appelé par les mécaniciens « cuisse de bergère ». Ce dispositif de fixation d'un premier type permet donc la fixation d'éléments de part et d'autre des joues 40 et 42. Le profilé représenté sur la figure 3 comporte quatre dispositifs de ce type, deux de chaque côté.

Les cavités 82 et 84, délimitées par les flasques 80 et 78, forment des dispositifs de fixation d'un second type. Ils peuvent être utilisés de deux manières différentes, décrites dans la suite du présent mémoire en référence aux figures 6 et 12.

En outre, les flasques externes 76 représentés sur la figure 3 permettent le clipsage d'autres éléments organiques, et constituent donc un dispositif de fixation d'un troisième type, utilisé comme décrit dans la suite en référence à la figure 9.

Les figures 5 et 6 représentent un exemple de platine, repérée par la référence 12 sur la figure 1. Cette platine 12 comporte essentiellement une barre 88 qui, comme indiqué sur la figure 6, a une largeur très légèrement inférieure à la distance séparant les deux joues 40 et 42 du profilé, et une épaisseur inférieure à la profondeur de la cavité ouverte 82. La barre 88 est soudée à une plaque 90. Un trou taraudé 92 est formé dans la barre 88 afin qu'une vis 94 puisse y être vissée. Lorsque la platine 12 est à hauteur convenable dans le profilé, le serrage de la vis 94 provoque la mise de son extrémité en butée dans la rainure 86 de la traverse 50 et la mise en appui de la face externe de la barre 88 contre la face interne des flasques 80. Des trous 96 permettent le vissage de la platine 12 dans le sol.

Les figures 7 et 8 représentent un exemple de support en U qui peut être utilisé par exemple pour la fixation des blocs 20 de connecteurs. Le support 22 représenté sur la figure 7 a une barre 98 munie de deux bras perpendiculaires 100 ayant un trou 102 à leur extrémité externe. En outre, un trou 104 formé dans la barre 98 est destiné à la fixation du bloc 20. Comme l'indique la figure 8, des vis 106 appliquent les bras 100 du support 22 contre les flasques 76 et 78, par vissage dans la « cuisse de bergère » formée par les deux ailes, comme décrit précédemment.

La figure 9 représente une variante dans laquelle le support en U 24 n'a pas de trou de vissage à l'extrémité de ses bras et est simplement maintenu sur les flasques 76 par des clips élastiques 108, bien connus des hommes du métier.

La figure 10 représente un exemple d'équerre 28 de support. Celle-ci comporte une plaque 100 sur laquelle sont soudés d'une part une tablette 112 et d'autre part un renfort 114. La tablette 112 se termine par une partie 116 recourbée vers le haut et a des trous 118 permettant le montage ou la fixation de différents organes tels qu'un marchepied, des serre-câbles, etc. La plaque 110 a un trou lisse 120 destiné au passage d'une vis, et un ergot repoussé 122, aligné sur le trou 120. Le montage de l'équerre 28 sur le profilé s'effectue de la manière suivante, comme indiqué sur la figure 12. La plaque 110 est appliquée contre la face externe des flasques 80 ou 78 de manière que l'ergot 122, dont la largeur est légèrement inférieure à celle de la fente délimitée entre les deux flasques 80, se centre dans cette fente. Une vis 124, préalablement introduite dans le trou 120 et munie d'une contre-plaque 126, pénètre par la fente délimitée entre les deux flasques 80. Il faut noter que la largeur de la contre-plaque 126 est inférieure à la largeur de la fente délimitée entre les deux flasques 80, mais la longueur L est supérieure à la largeur de cette fente. De cette manière, la contre-plaque passe facilement par la fente mais, dès que la vis 124 commence à être vissée, elle fait tourner la contre-plaque 126 qui vient en appui contre la face interne des flasques 80. De cette manière, la plaque 110, après serrage de la vis 124, est maintenue contre le profilé.

La figure 14 représente un exemple d'anneau 34 de cheminée. Celui-ci comprend une simple anse 130, soudée à un support 132 en U qui forme un organe de fixation très semblable à celui qu'on a décrit en référence aux figures 10 à 13. En effet, il comporte une plaque munie d'un ergot 134 et d'un trou 136. Son montage est analogue à celui qu'on a décrit en référence à la figure 12. La figure 15 représente une variante d'anneau 138, de forme différente, ayant une fente 140 d'entrée des cordons de liaison. Il a aussi un support 142 analogue à celui de la figure 14.

Les figures 16 et 17 représentent un exemple d'anneau de caniveau. Comme indiqué précédemment, chaque colonne a en fait deux anneaux 32 de caniveau, l'un pour les cordons de liaison qui partent vers la droite et l'autre pour ceux qui partent vers la gauche. Ces deux anneaux 32 qui ont une fente 148 avantageusement au coin supérieur externe, sont par exemple soudés sur une barre 144 elle-même soudée sur une plaque 146 formant un organe de fixation tel que décrit en référence aux figures 10 à 13. On ne les décrits donc pas plus en détail.

La figure 18 représente un exemple de vérin portant la référence générale 16 sur la figure 1. Ce vérin comporte essentiellement une plaque 150 munie de deux bras 152 destinés à pénétrer en bout dans les cavités fermées 54 du profilé. La plaque 150 a un trou taraudé dans lequel se visse un manchon fileté 154 ayant un organe 156 de mise en rotation, par exemple une tête à six pans. Le trou 158 du manchon loge une tige 160 munie d'une tête 162 portant un organe 164 d'amortissement, avantageusement formé de caoutchouc. Un ressort 166 est placé entre la tête 162 et le manchon 154. Lorsque le vérin doit être mis en place, le manchon 154 est serré jusqu'à ce que la tête 162 applique la force voulue contre le plafond, cette force étant déterminée par la compression du ressort 166.

La figure 19 représente un exemple connu de collier de serrage avantageusement utilisé dans le cadre de l'invention. Ce collier comporte un pontet 168 muni d'une vis 170 et délimitant des gorges 172 dans lesquelles un collier 174 peut coulisser. Ce dernier a un dispositif 176 de fixation à une extrémité. L'ensemble est avantageusement formé de matière plastique, à l'exception de la vis 170.

La figure 20 représente une caractéristique très avantageuse de l'invention. On sait qu'il est nécessaire que les bâtis et organes métalliques de support des appareils électriques soient mis à la masse. Cette mise à la masse peut être réalisée d'une manière extrêmement simple selon l'invention. Sur la figure 5, on a simplement indiqué qu'une tresse métallique 78 était introduite dans la chambre 70 formée au fond de la gorge délimitée par les ailes 56 et 58. Cette tresse 178 est mis en contact intime avec le profilé métallique par une vis 180. Celle-ci peut être une vis spécialement destinée à retenir la tresse, mais il peut aussi s'agir d'une vis de fixation d'un accessoire quelconque. Comme les différents accessoires tels que les anneaux, les têtes de câbles et les réglettes sont fixés sur le profilé par des éléments métalliques, il suffit que l'extrémité de la tresse 178 soit mise à la masse pour que l'ensemble de la colonne soit aussi à la masse.

La description qui précède ne concerne que certains éléments organiques et de nombreux accessoires peuvent aussi être montés sur les colonnes, soit directement en usine, soit même ultérieurement. Il faut cependant noter que, en plus des éléments représentés sur les figures 1 et 2, le répartiteur terminé porte les extrémités des câbles externes et internes fixés par des colliers ou tout dispositif convenable sur le profilé, de préférence sur les dispositifs de fixation de celui-ci qui ne sont pas utilisés.

En outre, ce montage donne une grande souplesse. Lorsqu'une extension doit être par exemple envisagée, des colonnes entières, montées en usine, peuvent être ajoutées. Dans une variante, des profilés peuvent être ajoutés et munis sur place des éléments organiques nécessaires, éventuellement prélevés sur des colonnes déjà montées, différents réarrangements étant possibles sans démontage important des éléments et sans démontage des profilés déjà montés ni des liaisons déjà effectuées.

Il est particulièrement avantageux que les blocs de connecteurs utilisés soient d'un type permettant des connexions par l'avant. Il existe différents types de blocs, certains pouvant tourner autour d'un axe. Leur fixation sur les profilés selon l'invention est très commode étant donné les dispositifs nombreux et de différents types prévus sur le profilé.

Un avantage important de l'invention, selon laquelle les colonnes munies des éléments organiques nécessaires sont préparées en usine puis expédiées, est que les répartiteurs peuvent être facilement transportés en conteneurs dans lesquels ils sont montés très rapidement, par exemple par simple serrage d'un vérin. La place occupée dans les conteneurs est alors très réduite.

**Revendications**

1. Colonne autonome de répartiteur téléphonique, caractérisée en ce qu'elle comprend :
- un seul profilé ayant la même section sur toute la longueur lui donnant une grande rigidité à la torsion et à la flexion et comportant au moins deux types de dispositifs de fixation solidaires du profilé et s'étendant sur toute la longueur du profilé,
- les deux types de dispositifs de fixation étant choisis parmi les trois types suivants :
  - un premier type comprenant deux ailes (56, 58) parallèles à l'axe longitudinal du profilé (10) et délimitant entre elles une gorge longitudinale (60) ayant deux faces internes en regard (62, 64),
  - un second type comprenant deux flasques (78 ; 80) solidaires du profilé (10) et délimitant une fente qui débouche dans une cavité (82 ;

84) délimitée par une traverse (42 ; 50) disposée en face de la fente, et
  - un troisième type ayant un flasque (76) destiné à porter un clips,
- des éléments de maintien destinés à la fixation du profilé à ses deux extrémités ou à leur proximité,
- plusieurs organes de fixation de blocs de connecteurs (20, 24) destinés à coopérer avec un type de dispositif de fixation du profilé, et
- au moins deux accessoires munis d'un organe de fixation destiné à coopérer avec un autre type de dispositif de fixation du profilé, un de ces accessoires (32) étant destiné à guider des cordons latéraux de liaison en un seul point sur la longueur du profilé.

2. Colonne selon la revendication 1, caractérisée en ce que le dispositif de fixation d'un premier type comprend deux ailes (56, 58) pourvues de rainures longitudinales (66, 68), les rainures longitudinales (66) d'une face étant décalées par rapport à celles (68) de l'autre face.

3. Colonne selon l'une des revendications 1 et 2, caractérisée en ce que le profilé forme plusieurs cavités fermées (52, 54), trois de préférence.

4. Colonne selon la revendication 1, caractérisée en ce que le profilé a quatre dispositifs de fixation du premier type et quatre dispositifs de fixation du second type, les ailes (56, 58) en regard de deux dispositifs de fixation du premier type portant des flasques (78) d'un dispositif de fixation du second type.

5. Colonne selon la revendication 1, caractérisée en ce que l'organe de fixation d'au moins un élément, destiné à coopérer avec un dispositif de fixation du premier type du profilé, comporte un organe appliqué contre les extrémités des ailes (56, 58) par une vis (102).

6. Colonne selon l'une des revendications 1 et 4, caractérisée en ce que l'organe de fixation d'un accessoire, destiné à coopérer avec un dispositif de fixation du second type, comporte une barre (88) logée dans une cavité (82) du profilé et repoussée contre une face interne d'un flasque (80) du dispositif de fixation du second type par une vis (94) prenant appui contre une traverse (50).

7. Colonne selon l'une des revendications 1 et 4, caractérisée en ce qu'elle comprend un accessoire ayant un organe de fixation destiné à coopérer avec un dispositif de fixation du second type du profilé, cet organe de fixation ayant une plaque (110) qui a un trou (120) et un ergot (122), placée contre une face externe d'un flasque (80) du dispositif de fixation du profilé, et une contre-plaque (126) est serrée par une vis (124) passant par le trou (120) de la plaque contre la face interne du flasque (80), l'ergot étant disposé entre les flasques et assurant l'alignement de l'organe de fixation.

8. Colonne selon la revendication 1, caractérisée en ce qu'elle comprend au moins un accessoire ayant un organe de fixation formé par un clips (108) destiné à coopérer avec un flasque (76) du profilé.

9. Colonne selon l'une quelconque des revendications précédentes, caractérisée en ce qu'elle comprend au moins un accessoire choisi dans le groupe qui comprend un anneau de cheminée, un anneau de caniveau, une équerre de support formant marchepied, une équerre de support formant support de câbles, un vérin à vis, un pied, un collier de serrage de câble, et une tresse de masse serrée par une vis.

10. Profilé pour colonne de répartiteur téléphonique selon l'une quelconque des revendications précédentes, caractérisé en ce qu'il comporte deux joues (40, 42) et quatre traverses (44-50) délimitant trois cavités fermées (52, 54), des premières ailes (56) prolongeant deux traverses, à l'extérieur des joues (40, 42), et des dispositifs de fixation d'un premier type (56, 58), d'un second type (78 ; 80) et d'un troisième type (76),
    – le premier type comprenant deux ailes (56, 58) parallèles à l'axe longitudinal du profilé (10) et délimitant entre elles une gorge longitudinale (60) ayant deux faces internes en regard (62, 64),
    – le second type comprenant deux flasques (78 ; 80) solidaires du profilé (10) et délimitant une fente qui débouche dans une cavité (82 ; 84) délimitée par une traverse (42 ; 50) disposée en face de la fente, et
    – le troisième type ayant un flasque (76) destiné à porter un clips.

11. Répartiteur téléphonique, caractérisé en ce qu'il comporte au moins deux colonnes selon l'une quelconque des revendications 1 à 9.

## Claims

1. Self-contained distributing frame column, characterized in that it includes :
    – a single profile having the same cross-section area through all its length giving a high torsional and flexural stiffness and having attaching means of at least two different kinds, integral with said profile and provided all along said profile,
    – attaching means of two different kinds being selected from the three following kinds :
    – a first kind including two wings (56, 58) parallel to longitudinal axis of said profile (10) and which define between them a longitudinal groove (60) having two opposed inner surfaces (62, 64),
    – a second kind including two flanges (78 ; 80) integral with said profile (10) and defining a slot opening into a recess (82 ; 84) defined by a cross piece (42 ; 50) opposed to said slot, and
    – a third kind having a flange (76) for holding a clip,
    – holding elements for attaching said profile at or near to its two ends,
    – several numbers for attaching blocks of connectors (20, 24) and for engaging one kind of attaching means of profile and
    – at least two attachments having an attaching member for engaging profile attaching means of an other kind, one of these attachments (32) being for guiding jumpers at a single position along said profile.

2. Column according to claim 1, characterized in that attaching means of a first kind includes two wings (56, 58) having longitudinal splines (66, 68), longitudinal splines (66) of a one surface being offset from those (68) of the other surface.

3. Column according to one of claims 1 and 2, characterized in that said profile defines several closed chambers (52, 54), preferably three.

4. Column according to claim 1, characterized in that the profile includes four attaching means of the first kind and four attaching means of the second kind, opposed wings (56, 58) of two attaching means of the first kind supporting flanges (78) of attaching means of the second kind.

5. Column according to claim 1, characterized in that attaching member of at least an element for engaging profile attaching means of the first kind includes a member applied against wing (56, 58) ends by a screw (102).

6. Column according to anyone of claim 1 and 4, characterized in that attaching member of an attachment for engaging attaching means of the second kind includes a bar (88) received in a recess (82) of said profile and pushed against an inner surface of a flange (80) of second kind attaching means by a screw (94) bearing on a cross piece (50).

7. Column according to claim 3 or 6, characterized in that it includes an attachment having attaching member for engaging a profile attaching means of second kind, said attaching member having a plate (110) including a hole (120) and a lug (122) and bearing on an outer surface of profile attaching means flange (80), and a back plate (126) is clamped by a screw (124) received in said plate hole (120) against inner surface of flange (80), said lug being received between flanges and providing alignment of attaching member.

8. Column according to claim 4, characterized in that it includes at least an attachment having an attaching member constituted by a clip (108) for engaging said profile flange (76).

9. Column according to anyone of preceding claims, characterized in that it includes at least an attachment selected from the group including a shaft ring, a foot ring, a supporting bracket forming a step, a supporting bracket forming cable support means, a screw jack, a leg, a cable clamping collar, and a ground braid clamped by a screw.

10. Profile for a distributing frame column according to anyone of preceding claims, characterized in that it includes two webs (40, 42) and four cross pieces (44-50) defining three closed chambers (52, 54), first wings (56) extending from two cross pieces outside said webs (40, 42), and attaching means of a first kind (56, 58), of a second kind (78 ; 80) and of a third kind (76),

– the first kind including two wings (56, 58) parallel to longitudinal axis of said profile (10) and defining between them a longitudinal groove (60) having two opposed inner surfaces (62, 64),
– the second kind including two flanges (78 ; 80) integral with said profile (10) and defining a slot opening into a recess (82 ; 84) defined by a cross piece (42 ; 50) opposed to said slot, and
– the third kind having a flange (76) for holding a clip.

11. Distributing frame, characterized in that it includes at least two columns according to anyone of claims 1 to 9.

**Ansprüche**

1. Autonome Fernsprechverteilerleiste, dadurch gekennzeichnet, daß sie enthält :
– ein Profil, das über seine gesamte Länge den gleichen Querschnitt aufweist, wodurch es eine große Biege- und Torsionssteifigkeit besitzt, und mit dem Profil fest verbundene Befestigungseinrichtungen in wenigstens zwei Typen enthält, die sich über die gesamte Länge des Profils erstrecken,
– wobei die zwei Typen der Befestigungseinrichtungen aus folgenden drei Typen ausgewählt werden :
– einer ersten Type mit zwei Flügeln (56, 58), die parallel zur Längsachse des Profils (10) verlaufen und zwischen sich eine längs verlaufende Rinne (60) mit zwei gegenüberliegenden Innenseiten (62, 64) begrenzen,
– einer zweiten Type mit zwei Flanschen (78 ; 80), die fest mit dem Profil (10) verbunden sind und einen Schlitz begrenzen, der in einem Hohlraum (82 ; 84) mündet, der durch eine Traverse (42 ; 50) begrenzt ist, die gegenüber dem Schlitz angeordnet ist, und
– einer dritten Type mit einem Flansch (76), der dazu bestimmt ist, einen Klipp zu tragen,
– Halteelemente, die für die Befestigung des Profiles an seinen beiden Enden oder in deren Nähe bestimmt sind,
– mehrere Blockverbinder-Befestigungsorgane (20, 24) für ein Zusammenwirken mit einer Type der Befestigungseinrichtungen des Profiles und
– wenigstens zwei mit einem Befestigungsorgan versehene Zusatzteile für ein Zusammenwirken mit einer anderen Type der Befestigungseinrichtungen des Profiles, wobei eines dieser Zusatzteile (32) dazu bestimmt ist, seitliche Verbindungsschnüre an einem einzigen Punkt über die Länge des Profils zu führen.

2. Leiste nach Anspruch 1, dadurch gekennzeichnet, daß die Befestigungseinrichtung der ersten Type zwei Flügel (56, 58) enthält, die mit Längsrillen (66, 68) versehen sind, wobei die Längsrillen (66) der einen Seite gegenüber denen (68) der anderen Seite verschoben sind.

3. Leiste nach einem der vorangegangenen Ansprüche, dadurch gekennzeichnet, daß das Profil mehrere, vorzugsweise drei, geschlossene Hohlräume (52, 54) bildet.

4. Leiste nach Anspruch 1, dadurch gekennzeichnet, daß das Profil vier Befestigungseinrichtungen der ersten Type und vier Befestigungseinrichtungen der zweiten Type aufweist, wobei die den beiden Befestigungseinrichtungen der ersten Type gegenüberliegenden Flügel (56, 58) Flansche (78) einer Befestigungseinrichtung der zweite Type tragen.

5. Leiste nach Anspruch 1, dadurch gekennzeichnet, daß das Befestigungsorgan von wenigstens einem Element, das zum Zusammenwirken mit einer Befestigungseinrichtung der ersten Type des Profils bestimmt ist, ein Organ enthält, das gegen die Enden der Flügel (56, 58) durch eine Schraube (102) angebracht ist.

6. Leiste nach einem der Ansprüche 1 und 4, dadurch gekennzeichnet, daß das Befestigungsorgan von einem Zusatzteil, der zum Zusammenwirken mit einer Befestigungseinrichtung der zweiten Type bestimmt ist, eine Strebe (8) enthält, die in einem Hohlraum (82) des Profils angeordnet und gegen eine Innenseite eines Flansches (80) der Befestigungseinrichtung der zweiten Type durch eine Schraube (94) gedrückt ist, die sich gegen eine Traverse (50) abstützt.

7. Leiste nach einem der Ansprüche 1 und 4, dadurch gegennzeichnet durch einen Zusatzteil mit einem für ein Zusammenwirken mit der Befestigungseinrichtung der zweiten Type des Profils bestimmten Befestigungsorgan, das eine Platte (110) besitzt, die ein Loch (120) und eine Nase (122) aufweist und gegen eine Außenseite eines Flansches (80) der Befestigungseinrichtung des Profils angeordnet ist, und mit einer Gegenplatte (126) versehen ist, die durch eine durch das Loch (120) der Platte hindurchgehende Schraube (124) gegen die Innenseite des Flansches (80) befestigt ist, wobei die Nase zwischen den Flanschen angeordnet ist und die Ausrichtung des Befestigungsorgans sichert.

8. Leiste nach Anspruch 1, dadurch gekennzeichnet, daß sie wenigstens einen Zusatzteil mit einem Befestigungsorgan enthält, das durch einen Klipp (108) gebildet ist, das dazu bestimmt ist, mit einem Flansch (76) des Profils zusammenzuwirken.

9. Leiste nach einem der vorhergehenden Ansprüche, dadurch gekennzeichnet, daß sie wenigstens einen Zusatzteil aus der Gruppe enthält, die einen Ringschacht, einen Ringkanal, einen ein Trittbrett bildenden Stützwinkel, einen eine Kabelstütze bildenden Stützwinkel, einen Schraubenhebebock, einen Fuß, eine Kabelbefestigungsschelle und ein Massenseil, das durch eine Schraube festgezogen wird, umfaßt.

10. Profil für eine Fernsprechverteilerleiste nach einem der vorhergehenden Ansprüche, gekennzeichnet durch zwei Wangen (40, 42) und vier Traversen (44-50), die drei geschlossene Hohlräume (52, 54) begrenzen, ferner die beiden Traversen verlängernde erste Flügel (56) auf der Außenseite der Wangen (40, 42) sowie Befestigungseinrichtungen einer ersten Type (56, 58), einer zweiten Type (78, 80) und einer dritten Type (76), wobei

– eine erste Type zwei Flügel (56, 58) enthält, die parallel zur Längsachse des Profils (10) verlaufen und zwischen sich eine längs verlaufende Rinne (60) mit zwei gegenüberliegenden Innenseiten (62, 64) begrenzen,

– eine zweite Type zwei Flansche (78 ; 80) enthält, die fest mit dem Profil (10) verbunden sind und einen Schlitz begrenzen, der in einem Hohlraum (82 ; 84) mündet, der durch eine Traverse (42 ; 50) begrenzt ist, die gegenüber dem Schlitz angeordnet ist, und

– eine dritte Type einen Flansch (76) enthält, der dazu bestimmt ist, einen Klipp zu tragen.

11. Fernsprechverteiler, dadurch gekennzeichnet, daß er wenigstens zwei Verteilerleisten gemäß einem der Ansprüche 1 bis 9 enthält.

Fig.20

Fig.13

Fig.2

Fig.1

Fig. 5

Fig. 6

Fig. 18

Fig. 16

Fig. 3

Fig. 4

Fig. 17

Fig. 19

Fig. 7

Fig. 8

Fig. 9

Fig. 12

Fig. 10

Fig. 11

Fig. 14

Fig. 15